(19) Europäisches Patentamt

European Patent Office

Office européen des brevets

(11) Veröffentlichungsnummer: **0 285 171 B1**

## (12) EUROPÄISCHE PATENTSCHRIFT

(45) Veröffentlichungstag der Patentschrift: **30.09.92**

(21) Anmeldenummer: **88105297.1**

(22) Anmeldetag: **31.03.88**

(51) Int. Cl.⁵: **F24D 13/02**, F24H 3/00

---

(54) **Flächenheizkörper.**

---

(30) Priorität: **02.04.87 DE 3711035**

(43) Veröffentlichungstag der Anmeldung:
**05.10.88 Patentblatt 88/40**

(45) Bekanntmachung des Hinweises auf die
Patenterteilung:
**30.09.92 Patentblatt 92/40**

(84) Benannte Vertragsstaaten:
**AT DE ES FR GR IT**

(56) Entgegenhaltungen:
**DE-A- 3 530 690**
**DE-U- 1 883 914**
**US-A- 3 303 324**
**US-A- 3 737 624**

(73) Patentinhaber: **Rupp, Johann**
**Dieselstrasse 6**
**W-8510 Fürth(DE)**

(72) Erfinder: **Rupp, Johann**
**Dieselstrasse 6**
**W-8510 Fürth(DE)**

(74) Vertreter: **Eder, Eugen, Dipl.-Ing. et al**
**Patentanwälte Dipl.-Ing. E. Eder Dipl.-Ing. K.**
**Schieschke Elisabethstrasse 34**
**W-8000 München 40(DE)**

Rank Xerox (UK) Business Services

## Beschreibung

Die Erfindung betrifft einen elektrischen Flächenheizkörper mit den Merkmalen des Oberbegriffs des Patentanspruchs 1.

Ein solcher elektrischer Flächenheizkörper ist aus der DE-A 35 30 690 vorbekannt. Dieser besitzt eine Frontplatte aus Naturstein mit ebener Rückseite. Eine rückseitige Trägerplatte ist über eine einen elektrischen Heizleiter einbettende Klebeschicht mit der Frontplatte verbunden. Der Flächenheizkörper ist mittels in Sacklöchern der Frontplatte befestigten, die Trägerplatte durchsetzenden Haltebolzen an einer Wand oder dgl. gehalten. Nachteilig ist, daß die Trägerplatte durch den Heizleiter unnötig aufgeheizt wird. Ferner sind Frontplatte und Trägerplatte, da sie miteinander verklebt sind, nicht leicht auswechselbar.

Die DE-U-1 883 914 beschreibt einen flächenförmigen Heizkörper, der als verhältnismäßig schwach erhitzte Fläche für Decken und Wandbeheizungen, für Heizkissen und dgl. geeignet sein soll. Hierbei wird auf eine Kunststoffolie oder eine eloxierte Aluminiumfolie der Heizleiter, z.B. nach Art der gedruckten Schaltung aufgebracht. Die mit dem Heizleiter versehene Folie kann frontseitig mit einer Fläche, z.B. aus Kunststoffschaum oder dgl. fest durch Kleben verbunden werden. Auch hier ist ein einfaches Lösen von Träger mit Heizleiter und frontseitiger Fläche nicht möglich.

Ein weiterer elektrischer Flächenheizkörper ist aus der US-A-3 303 324 bekannt. Hierbei ist eine Frontplatte aus Quarz und eine rückseitige Trägerplatte aus Asbest mit in Nuten eingelagertem elektrischen Heizleiter vorhanden. Die Rückseite der Trägerplatte ist mit einer reflektierenden Strahlungsfolie versehen. Frontplatte und Trägerplatte sind in einem Halterahmen gelagert. Nachteilig ist, daß bei diesem Flächenheizkörper der Heizleiter von einer Heizwendel gebildet wird, die in einer fortlaufenden Nut in der Trägerplatte untergebracht ist. Ein Teil der Wärme dieses Heizleiteres bewirkt ein unnötiges Aufheizen der Asbestplatte. Ferner ist bei diesem bekannten Flächenheizkörper ein zusätzlicher Rahmen erforderlich.

Der Erfindung liegt die Aufgabe zugrunde, den einleitend beschriebenen, bekannten elektrischen Flächenheizkörper so zu verbessern, daß er einfacher herstellbar ist, seine Bauteile einfach auswechselbar sind und eine gute Wärmeabstrahlung zur Frontplatte hin ermöglicht wird.

Die Erfindung löst diese Aufgabe mit den kennzeichnenden Merkmalen des Patentanspruches 1.

Die Erfindung bietet den Vorteil, daß die an der Vorderseite der Trägerplatte vorgesehene wärmereflektierende Strahlungsfolie einen Wärmeanteil zur Frontplatte aus Naturstein zurückstrahlt, dadurch eine unnötige Aufheizung der wärmedämmenden Trägerplatte und damit eine schädliche Ausdehnung der Trägerplatte verhindert. Außerdem sind Frontplatte aus Naturstein und Trägerplatte leicht lösbar und austauschbar verbunden. Eine getrennte Herstellung an getrennten Orten und Fertigstellung an einem Ort sind dadurch ohne weiteres möglich. Der Herstellungsbetrieb für die Frontplatte aus Naturstein benötigt somit keine die Trägerplatte mit Heizkörper herstellenden Fachleute.

Weitere Ausgestaltungen der Erfindung ergeben sich aus den übrigen Unteransprüchen.

Die Erfindung wird nachfolgend anhand eines in der Zeichnung dargestellten Ausführungsbeispielen näher beschrieben. In der Zeichnung zeigen:

Fig. 1    eine schematische Teilseitenansicht des Flächenheizkörpers nach der Erfindung,

Fig. 2    eine Teilseitenansicht der Trägerplatte und

Fig. 3    eine schematische Ansicht der Trägerplatte.

Der Flächenheizkörper 1 besitzt eine Frontplatte 2. Vorzugsweise besitzt diese rechteckige Form. Sie besteht vorzugsweise aus Naturstein, z.B. Marmor.

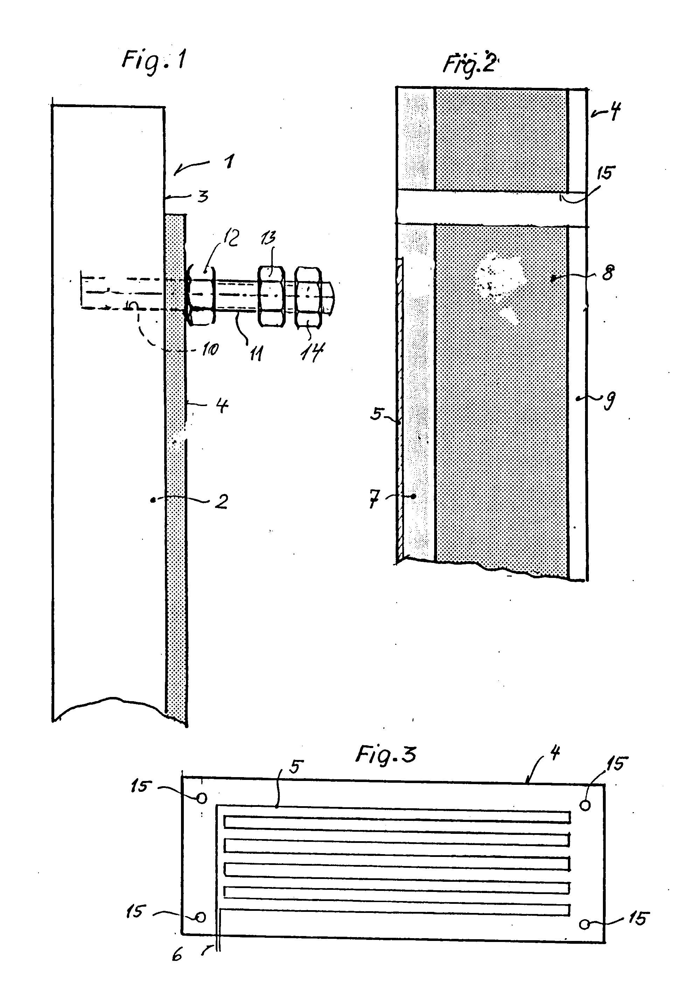

Diese Frontplatte 2 ist an ihrer Rückseite eben ausgebildet. Sie trägt eng anliegend eine vorzugsweise rechteckige Trägerplatte 4. Auf diese Trägerplatte 4 ist auf der der Frontplatte 2 zugekehrten Fläche ein dünner Heizdraht 5, vorzugsweise Flachdraht, aufgebracht. Dieser Heizdraht 5 ist wie aus Fig. 3 ersichtlich, meanderförmig verlegt. Die Anschlußenden 6 sind mit einem nicht dargestellten Anschlußkabel, Temperaturbegrenzer, Thermostat oder dergleichen verbunden. Vorzugsweise ist der Heizdraht auf die Trägerplatte 4 aufgedruckt.

Die Trägerplatte 4 besteht vorzugsweise aus einer Strahlungsfolie 7, z.B. aus Aluminium, die die vom Heizdraht er zeugte Wärme zur Frontplatte hin reflektiert.

Um die rückseitige Wärmeabstrahlung noch weiter zu reduzieren, ist die Strahlungsfolie 7 mit einer Wärmedämmplatte 8, z.B. aus Styropor oder dergleichen, verbunden.

Die Rückseite dieser Wärmedämmplatte 8 kann wiederum von einer Strahlungsfolie 9 bedeckt sein.

Diese so ausgebildete Trägerplatte 4, welche den Heizdraht 5, die Strahlungsfolie 7, die Wärmedämmplatte 8 und die Strahlungsfolie 9 umfaßt, bildet eine getrennte, anschlußfertige Baueinheit, die eine in sich starre Form besitzt.

Diese Trägerplatte 4 wird wie aus Fig. 1 ersichtlich, an der Rückseite der Frontplatte 2 befestigt. Wird der Heizdraht 5 von Strom durchflossen, nimmt die Frontplatte 2 die erzeugte Wärme nach und nach auf und speichert sie. Die Frontplatte 3 gibt die Wärme dabei weitgehendest als Strahlungswärme nach vorne ab.

Die Trägerplatte 4 ist vorzugsweise mit der Frontplatte 2 dadurch verbunden, daß diese an ihrer Rückseite vier Sacklöcher 10 besitzt. In diesen Sacklöchern 10 sind Gewindebolzen 11 befestigt. Sie können in den Sacklöchern 10 eingeklebt sein. Vorzugsweise besitzen sie die Form von metallischen Spreizdübeln. Die Trägerplatte 4 wird eng anliegend an der Frontplatte 2 mittels Befestigungsmuttern 12 befestigt. Weitere Muttern 13, 14 können zur Befestigung an nicht dargestellten Wandhalterungen oder dergleichen verwendet werden.

Die Trägerplatte 4 besitzt im Bereich ihrer Ekken passende Löcher 15 zum Durchtritt der Gewindebolzen 11.

## Patentansprüche

1. Elektrischer Flächenheizkörper
mit einer Frontplatte aus Naturstein mit ebener Rückseite,
einer getrennten, rückwärtigen Trägerplatte,
einem elektrischen Heizleiter, der an der Rückseite der Frontplatte anliegt
und in Sacklöchern der Frontplatte befestigten, die Trägerplatte durchsetzenden Haltebolzen zur Halterung von Frontplatte und Trägerplatte an einer Wand oder dergleichen,
dadurch gekennzeichnet,
daß die Trägerplatte (4) wärmedämmend ist und an der der Frontplatte (2) zugekehrten Vorderseite eine wärmereflektierende Strahlungsfolie (7) besitzt, auf die der elektrische Heizleiter (5) aufgebracht ist,
daß die Trägerplatte (4) mit Heizleiter (5), Strahlungssfolie (7) und Wärmedämmplatte (8) als getrennte, fertige Baueinheit ausgebildet ist und
daß die Trägerplatte (4) über die Haltebolzen (11) mit Muttern (12) an der Rückseite der Frontplatte (2) befestigt ist.

2. Flächenheizkörper nach Anspruch 1,
dadurch gekennzeichnet, daß der elektrische Heizleiter (5) auf die Strahlungsfolie (7) in Form eines Flachdrahtes aufgedruckt, aufkaschiert oder dgl. aufgebracht ist.

3. Flächenheizkörper nach den Ansprüchen 1 und 2,
dadurch gekennzeichnet, daß die Trägerplatte (4) eine rückseitige Strahlungsfolie (9) besitzt.

4. Flächenheizkörper nach den Ansprüchen 1 bis 3,

dadurch gekennzeichnet,
daß die Strahlungsfolien (7, 9) aus Aluminium sind.

5. Flächenheizkörper nach Anspruch 1,
dadurch gekennzeichnet,
daß die Haltebolzen (11) zugleich Abstandshalter zu einer Wand oder dgl. bilden.

## Claims

1. Flat electrical radiator or heater, having a front plate made from natural stone, with a plane rear face, a separate rear supporting panel, an electrical heating conductor which is adjacent to the rear face of the front plate, and holding bolts which extend through the supporting panel and are secured in blind holes of the front plate for mounting the front plate and supporting panel on a wall or the like, characterised in that the supporting panel (4) is heat-insulating, and has at the front face directed towards the front plate (2) a heat-reflecting radiant sheet (7) on which the electrical heating conductor (5) is arranged, that the supporting panel (4) with heating conductor (5), radiant sheet(7)and a thermally insulating panel (8), is constructed as a separate prefabricated unit, and that the supporting panel (4) is secured by means of the holding bolts (11) with nuts (12) on the rear face of the front plate (2).

2. Flat heater according to claim 1, characterised in that the electrical heating conductor (5) is applied to the radiant sheet (7) in the form of a flat wire by printing-on, laminating-on, or the like.

3. Flat heater according to claims 1 and 2, characterised in that the supporting panel (4) has a radiant sheet (9) at the rear side.

4. Flat heater according to claims 1 to 3, characterised in that the radiant sheets (7, 9) are made of aluminium.

5. Flat heater according to claim 1, characterised in that the holding bolts (11) at the same time act as spacer elements spacing from a wall or the like.

## Revendications

1. Corps chauffant plat électrique comportant une plaque frontale en pierre naturelle comportant une face arrière plane, une plaque support séparée disposée à l'arrière, un conducteur chauffant électrique qui repose sur la face arrière de la plaque frontale et des boulons de maintien fixés dans des trous borgnes de la plaque frontale et traversant la plaque support en vue de maintenir la plaque frontale et la plaque support sur une paroi ou analogue, caractérisé

en ce que la plaque support (4) est isolante et possède sur sa face avant en regard de la plaque frontale (2) une feuille rayonnante (7) réfléchissant la chaleur sur laquelle est fixé le conducteur chauffant électrique (5),

en ce que la plaque support est conformée sous la forme d'un élément constitutif séparé préfabriqué avec le conducteur de chauffage (5), la feuille rayonnante (7) et la plaque isolante (8) et

en ce que la plaque support (4) est fixée au moyen des boulons de maintien (11) par des écrous (12) sur la face arrière de la plaque frontale (2).

2. Corps chauffant plat selon la revendication 1, caractérisé en ce que le conducteur chauffant électrique (5) est appliqué sous la forme d'un fil plat par pression, par contrecollage ou analogue.

3. Corps chauffant plat selon les revendications 1 et 2, caractérisé en ce que la plaque support possède une feuille rayonnante (9) sur sa face arrière.

4. Corps chauffant plat selon les revendications 1 à 3, caractérisé en ce que les feuilles rayonnantes (7,9) sont en aluminium.

5. Corps chauffant plat selon la revendication 1, caractérisé en ce que les boulons de maintien constituent simultanément des entretoises par rapport à une paroi ou analogue.

Fig.1

Fig.2

Fig.3